# EUROPÄISCHE PATENTSCHRIFT

(11) **EP 2 855 190 B1**
(45) Veröffentlichungstag und Bekanntmachung des Hinweises auf die Patenterteilung: **18.01.2017**
(21) Anmeldenummer: 13725280.5
(22) Anmeldetag: 25.05.2013
(51) Int. Cl.: B60K 37/06, B60W 30/17, H04W 4/00

(54) **KRAFTWAGEN MIT EINER STEUEREINRICHTUNG FÜR EIN FAHRZEUGFREMDES COMPUTERSYSTEM**
MOTOR VEHICLE WITH A CONTROL DEVICE FOR AN EXTRAVEHICULAR COMPUTER SYSTEM
VÉHICULE À MOTEUR COMPORTANT UN DISPOSITIF DE COMMANDE POUR UN SYSTÈME INFORMATIQUE EXTERNE AU VÉHICULE

(30) Priorität: 01.06.2012 DE 102012010887
(43) Veröffentlichungstag der Anmeldung: 08.04.2015
(73) Patentinhaber: Audi AG, 85045 Ingolstadt (DE)
(72) Erfinder: ENTHALER, Achim, 85049 Ingolstadt (DE); ROEHDER, Martin, 85049 Ingolstadt (DE)
(74) Vertreter: Brandt, Kai
(86) Internationale Anmeldenummer: PCT/EP2013/001551
(87) Internationale Veröffentlichungsnummer: WO 2013/178346

(56) Entgegenhaltungen:
- WO-A1-03/036805
- US-A1- 2007 069 913
- US-A1- 2007 213 092

## Beschreibung

Die Erfindung betrifft einen Kraftwagen mit einer Steuereinrichtung, mittels welcher ein fahrzeugfremdes Computersystem steuerbar ist. Zu der Erfindung gehört auch ein Verfahren zum Unterstützen eines Fahrers bei der Erledigung von Büroarbeiten in dem erfindungsgemäßen Kraftwagen.

Aus dem Stand der Technik ist hierzu beispielsweise aus der DE 10 2008 019 288 A1 bekannt, ein Mobiltelefon mittels einer Steuereinheit eines Kraftwagens zu bedienen, indem auf einem Touchscreen des Kraftwagens, d.h. einem berührungsempfindlichem Bildschirm, eine Bedien- und Anzeigestruktur des Mobiltelefons übernommen wird, auf der beispielsweise in dem Mobiltelefon gespeicherte Telefonnummern angezeigt sind. Einem Fahrer des Kraftwagens ist es hierdurch möglich, während der Fahrt auf dem zentral in der Mittelkonsole angeordneten Touchscreen eine Telefonnummer auszuwählen und über die Freisprechanlage des Kraftwagens einen Anruf zu tätigen.

Der Oberbegriff des Anspruchs 1 ist aus der US 2007/213092 A bekannt. Nach heutigem Stand der Technik hat ein Fahrer aber keine Möglichkeit, während der Fahrt an einem Computer zu arbeiten und so seine Fahrzeit produktiv zu nutzen. Mit der Etablierung autonomer Fahrzeuge, die beispielsweise im Stop-and-Go-Verkehr oder während eines Staus das Fahrzeug selbständig führen, ist absehbar, dass der Fahrer in Zukunft auch die Zeit im Fahrzeug als Arbeitszeit nutzen möchte. Steht heute ein Fahrer im Stau, so ist er genötigt, einen Bürocomputer, beispielsweise ein Laptop oder ein Tablet-PC, auf seinem Schoß vor dem Lenkrad oder auf dem Beifahrersitz zu platzieren. Löst sich der Stau auf und muss der Fahrer dann sofort wieder die Aufmerksamkeit auf den Verkehr lenken, lässt er den Arbeitscomputer unbeaufsichtigt. Muss dann das Fahrzeug plötzlich abgebremst werden, kann dies zu einer Beschädigung des Arbeitscomputers führen, weil dieser ungesichert im Fahrzeug während der Bremsung verrutscht.

Eine Aufgabe der Erfindung besteht darin, eine Möglichkeit zu schaffen, um es einem Fahrer zu erleichtern, in seinem Kraftwagen Büroarbeiten zu erledigen.

Die Aufgabe wird durch einen Kraftwagen gemäß Patentanspruch 1 sowie ein Verfahren gemäß Patentanspruch 11 gelöst. Vorteilhafte Weiterbildungen der Erfindung sind durch die Unteransprüche gegeben.

Bei dem Computersystem handelt es sich insbesondere um zumindest eines aus den folgenden Geräten: ein Laptop, ein Notebook, ein Tablet-PC und einen über ein Computernetzwerk, beispielsweise das Internet, bedienbaren Netzwerkcomputer mit einer so genannten Cloud-Arbeitsumgebung. Unter einer Cloud-Arbeitsumgebung wird vorliegend ein Netzwerkdienst verstanden, der durch den Netzwerkcomputer bereitgestellt ist, und der es ermöglicht, ein Arbeitsergebnis, beispielsweise das Schreiben eines Briefes oder das Erstellen von Präsentationsfolien, in dem Netzwerkcomputer zu speichern und es anschließend mit weiteren Computersystemen zu synchronisieren, d. h. das Arbeitsergebnis an diese weiteren Computersysteme zu übertragen. Bei den übrigen, in der vorstehenden Liste genannten Geräten kommt es bei der Erfindung nicht unbedingt darauf an, wo sich diese befinden. Beispielsweise kann vorgesehen sein, dass auch ein Laptop oder ein Tablet-PC mittels der Steuereinrichtung aktiviert wird, welches sich im Kofferraum oder in einer Aktentasche auf dem Rücksitz oder auch an einem Platz außerhalb des Kraftwagens befindet. Es kann bei dem erfindungsgemäßen Kraftwagen aber auch vorgesehen sein, dass eine Docking-Station bereitgestellt ist, in welcher das Gerät fixiert wird.

Der erfindungsgemäße Kraftwagen weist den Vorteil auf, dass durch die Steuereinrichtung eine zusätzliche Schnittstelle im Fahrzeug bereitgestellt ist, die es ermöglicht, ein externes Computersystem im Fahrzeug oder vom Fahrzeug aus zu aktivieren bzw. zu deaktivieren. So ist es beispielsweise möglich, ein im Kofferraum des Fahrzeugs platziertes Computersystem während der Fahrt zu aktivieren oder zu deaktivieren. Dies ist besonders dann von Vorteil, wenn der Fahrer z. B. zu Beginn der Fahrt ein ausgeschaltetes fahrzeugfremdes Computersystem, also etwa sein Laptop, in den Kofferraum gelegt hat. Gerät der Fahrer dann in stockenden Verkehr, so muss er während der Fahrt nicht noch einmal den Kraftwagen anhalten, um zum Kofferraum zu gehen und dort das Laptop zu aktivieren. Genauso kann ermöglicht sein, das Laptop durch die Steuereinrichtung auch zu deaktivieren, wenn sich beispielsweise der Stau auflöst und der Fahrer seine Fahrt fortsetzen möchte. In diesem Zusammenhang sieht eine Weiterbildung des erfindungsgemäßen Verfahrens vor, dass das Computersystem automatisch durch die Steuereinrichtung deaktiviert wird, falls ein vorbestimmtes Abschaltkriterium erfüllt ist. Unter einem Deaktivieren ist im Zusammenhang mit der Erfindung sowohl ein vollständiges Ausschalten des Geräts als auch das Überführen des Geräts in einen Stand-by-Zustand, wie er an sich aus dem Stand der Technik im Zusammenhang mit elektronischen Geräten bekannt ist.

Bei dem Abschaltkriterium kann es sich beispielsweise darum handeln, dass von der Steuereinrichtung für einen vorbestimmten Zeitraum, beispielsweise 10 Minuten, keine Bedientätigkeit des Fahrers betreffend das Computersystem erkannt wurde. Dann ist davon auszugehen, dass der Fahrer sich nicht mehr mit dem Computersystem beschäftigt und dieses deshalb beispielsweise zum Zwecke der Energieersparnis deaktiviert werden kann. Auch ein Fahrgeschwindigkeitsprofil kann Aufschluss darüber geben, ob der Fahrer sich überhaupt mit dem Computersystem beschäftigt. Hier kann als Kriterium z.B. ein Schwellenwert für eine Durchschnittsgeschwindigkeit zugrunde gelegt werden. Generell ist das Kriterium derart zu wählen, dass bei dessen Erfüllt-Sein davon auszugehen ist, dass der Fahrer nicht mehr mit dem Computersystem arbeitet oder ein Weiterarbeiten die Sicherheit des Fahrers gefährdet.

Um zu ermöglichen, dass mittels der Steuereinrichtung der Betriebszustand des Computersystems gewechselt werden kann, sieht eine Ausführungsform des erfindungsgemäßen Kraftwagens vor, dass der Kraftwagen eine Anschlusseinrichtung zum Bereitstellen einer Betriebsspannung für das Computersystem aufweist. Die Anschlusseinrichtung ist dabei derart ausgestaltet, dass die Betriebsspannung an einem elektrischen Anschluss für das Computersystem, beispielsweise einer Steckdose, in Abhängigkeit von einem Steuersignal erzeugt wird. Das Steuersignal empfängt die Anschlusseinrichtung von der bereits erwähnten Steuereinrichtung. Diese ist bei dieser Ausführungsform dazu ausgelegt, zum Wechseln des Betriebszustands des Computersystems die Betriebsspannung durch Erzeugen eines entsprechenden vorbestimmten Steuersignals zu verändern, also die Spannungsversorgung für das Computersystem entweder an- oder abzuschalten. Anstelle einer Steckdose kann beispielsweise auch vorgesehen sein, die Spannungsversorgung in einer Docking-Station für das Computersystem zu verändern. Durch das Schalten der Betriebsspannung ergibt sich der Vorteil, dass in dem erfindungsgemäßen Kraftwagen eine vollständige Kontrolle über die vom Kraftwagen an das fahrzeugfremde Computersystem abgeführte elektrische Energie kontrolliert werden kann.

Eine weitere Ausführungsform des erfindungsgemäßen Kraftwagens sieht vor, dass der elektrische Anschluss in einem Kofferraum des Kraftwagens angeordnet ist. Dann belegt ein daran angeschlossenes Computersystem in vorteilhafter Weise keinen Platz im Fahrgastraum.

Gemäß einer anderen Weiterbildung des erfindungsgemäßen Kraftwagens weist dieser eine Kommunikationseinrichtung auf, welche dazu ausgelegt ist, Daten mit den Computersystem auszutauschen. Bei der Kommunikationseinrichtung kann es sich beispielsweise um einen WLAN-Router (WLAN - Wireless Local Area Network) oder auch ein drahtgebundenes LAN-Gerät (LAN - Local Area Network) handeln. Die Kommunikationseinrichtung kann auch einen USB (Universal Serial Bus) oder eine Kommunikation gemäß dem Bluetooth-Standard vorsehen. Bei dieser Weiterbildung des erfindungsgemäßen Kraftwagens ist die Steuereinrichtung dann dazu ausgelegt, zum Wechseln des Betriebszustandes ein Aufwecksignal und/oder ein Ausschaltsignal über die Kommunikationseinrichtung an das Computersystem zu übertragen. Mit anderen Worten wird bei dieser Ausführungsform über die Schnittstelle für das externe Computersystem ein entsprechender Wake-up-Impuls bzw. ein Shut-down-Impuls geschickt. Diese Weiterbildung weist den Vorteil auf, dass das Wechseln des Betriebszustands unabhängig von einer Spannungsversorgung für das Computersystem erfolgen kann und z.B. auch der erwähnte Netzwerkcomputer über eine entsprechende Netzwerkverbindung gesteuert werden kann.

Eine weitere Ausführungsform des erfindungsgemäßen Kraftwagens sieht vor, dass die Steuereinrichtung dazu ausgelegt ist, eine Verfügbarkeit des Computersystems selbstständig zu detektieren und das Ergebnis der Detektion einem Benutzer des Kraftwagens über eine Anzeigeeinrichtung anzuzeigen, also etwa auf einem Bildschirm in der Mittelkonsole. Ein Fahrer kann dann vom Fahrersitz aus überprüfen, welche Computersysteme ihm für die Erledigung von Büroarbeiten zur Verfügung stehen.

In diesem Zusammenhang sieht eine Weiterbildung des Kraftwagens vor, dass die Steuereinrichtung dazu ausgelegt ist, den Betriebszustand des Computersystems in Abhängigkeit von der Bedienhandlung zu wechseln, die ein Benutzer an einer Bedieneinrichtung des Kraftwagens ausführt. Der Fahrer kann dann nach seinem eigenen Wunsch das Computersystem manuell aktivieren und/oder deaktivieren. Beispielsweise kann dem Fahrer in einem Bedienmenü eines Infotainmentsystems des Kraftwagens das Auswählen einer entsprechenden Funktion ermöglicht sein.

Im Modus "Computersystem aktiv" werden dann zweckmäßigerweise verfügbare Bedienelemente und Ausgabegeräte des Kraftwagens ebenfalls automatisch aktiviert bzw. in ihrer Funktion für eine Bedienung des Computersystems angepasst. Hierzu sieht eine Ausführungsform des erfindungsgemäßen Kraftwagens vor, dass bei dem erfindungsgemäßen Kraftwagen eine Bedieneinrichtung in einem ersten Betriebszustand zum Bedienen zumindest einer Kraftwagenkomponente ausgelegt ist, als etwa eines Radios. Bevorzugt umfasst die Bedieneinrichtung zumindest eines der folgenden Eingabegeräte: ein Touchpad, ein Gestenerkennungssystem, eine Tastatur, einen Lenkstockhebel, ein Lenkrad, ein Pedal, einen Dreh-Drück-Steller, einen Schalter einer Armatur des Kraftwagens. Die Bedieneinrichtung ist dabei zwischen diesem ersten und einem zweiten Betriebszustand umschaltbar ausgestaltet. In dem zweiten Betriebzustand überträgt die Bedieneinrichtung dabei Steuersignale anstatt zu der zumindest einen Kraftwagenkomponente zu dem Computersystem. Hierdurch muss in vorteilhafter Weise keine zusätzliche Bedieneinrichtung zum Bedienen des Computersystems in dem Kraftwagen bereitgestellt sein. Die Bedieneinrichtung zum Bedienen der zumindest einen Kraftwagenkomponente kann stattdessen einfach in den zweiten Betriebszustand umgeschaltet werden und für die Bedienung des Computersystems verwendet werden.

In Bezug auf eine Verwendung eines Ausgabegeräts des Kraftwagens sieht eine Weiterbildung des erfindungsgemäßen Kraftwagens vor, dass eine Ausgabeeinrichtung des Kraftwagens in einem ersten Betriebszustand ein Signal zumindest einer Kraftwagenkomponente an einem Benutzer des Kraftwagens ausgibt. Zweckmäßige Beispiele für ein Ausgabegerät, dass von der Ausgabeeinrichtung umfasst sein kann, sind ein Bildschirm in einer Mittelkonsole des Kraftwagens, eine Head-up-Anzeigevorrichtung, die eine Anzeige auf die Windschutzscheibe vor dem Fahrer projiziert, ein Bildschirm eines Kombiinstruments hinter dem Lenkrad des Kraftwagens, eine in eine Frontscheibe oder eine Seitenscheibe des Kraftwagens integrierte Anzeigevorrichtung, ein Lautsprecher des Kraftwagens. Gemäß der Weiterbildung des erfindungsgemäßen Kraftwagens ist die Ausgabeeinrichtung zwischen dem ersten und einem zweiten Betriebszustand umschaltbar ausgestaltet, in welchem die Ausgabeeinrichtung anstelle eines Signals der zumindest einen Kraftwagenkomponente oder zusätzlich zu diesem Signal zumindest ein Signal des Computersystems empfängt und an den Benutzer ausgibt. Hierdurch ist es in vorteilhafter Weise ermöglicht, dass der Fahrer eine Anzeige des Computersystems, beispielsweise einen Desktop oder eine Anzeige eines Textprogramms oder eines E-Mail-Programms, mittels der Ausgabeeinrichtung betrachten kann. Eine Möglichkeit, eine solche Anzeige zu realisieren, besteht in der Verwendung des VNC (Virtual Network Computing).

Besonders vorteilhaft ist es, wenn der Kraftwagen zusätzlich eine Führungseinrichtung aufweist, die dazu ausgelegt ist, den Kraftwagen in einem autonomen Fahrmodus selbsttätig ohne ein Zutun des Fahrers zu führen, d. h. eine Längs- und Querführung des Kraftwagens selbständig durchzuführen. Unter einer Längsführung ist in dem Zusammenhang das Beschleunigen und Abbremsen des Fahrzeugs, unter einer Querführung das Lenken des Fahrzeugs zu verstehen. Gemäß dieser Weiterbildung des Kraftwagens ist die Steuereinrichtung dann dazu ausgelegt, denn Kraftwagen zwischen einem Fahrmodus, in welchem der Kraftwagen durch den Fahrer zu führen ist, und einem Büroarbeitsmodus umzuschalten. Das Umschalten in den Büroarbeitsmodus umfasst hierbei, das Aktivieren der Führungseinrichtung, sodass der Kraftwagen dann durch die Führungseinrichtung selbsttätig geführt wird, sowie das Aktivieren des Computersystems. Der Fahrer kann dann in vorteilhafter Weise vollständig die Aufmerksamkeit vom Verkehr abwenden und sich der Erledigung von Büroarbeiten mittels des Computersystems widmen.

Im Zusammenhang mit einer Ausgestaltung des Büroarbeitsmodus sieht eine Weiterbildung des erfindungsgemäßen Kraftwagens vor, dass das Aktivieren des Büroarbeitungsmodus des weiteren zumindest eine der folgenden Einstellungen durch die Steuereinrichtung umfasst: eine Positionierung des Fahrersitzes; eine Veränderung der Lage des Lenkrades, das beispielsweise vom Fahrer weg bewegt werden kann, damit dieser einen größeren Freiraum für Bewegungen hat; eine Einstellung einer Beleuchtung im Fahrgastraum; das Zurückklappen oder Einziehen eines Pedals, wodurch dann der verfügbare freie Fußraum für den Fahrer vergrößert wird. Diese Maßnahmen ermöglichen einzeln oder in Kombination eine Verbesserung der Konzentrationsfähigkeit des Fahrers bei der Erledigung der Bürotätigkeit sowie der Bequemlichkeit.

Zu der Erfindung gehören auch Weiterbildungen des erfindungsgemäßen Verfahrens, die Merkmale aufweisen, die den Merkmalen der Weiterbildungen des erfindungsgemäßen Kraftwagens entsprechen, wie sie bereits beschrieben wurden. Aus diesem Grund sind die entsprechenden Merkmale der Weiterbildungen des erfindungsgemäßen Verfahrens hier nicht noch einmal beschrieben.

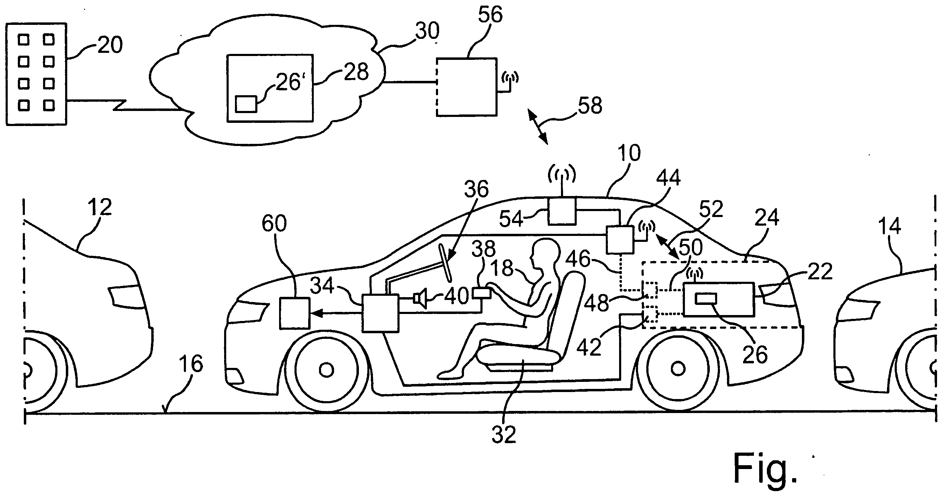

Im Folgenden wird die Erfindung noch einmal anhand eines konkreten Ausführungsbeispiels näher erläutert. Dazu zeigt die einzige Figur (Fig.) eine schematische Darstellung einer bevorzugten Ausführungsform des erfindungsgemäßen Kraftwagens.

Die Figur zeigt einen Kraftwagen 10, der beispielsweise ein Personenkraftwagen sein kann. Für die Erläuterung des Beispiels sei angenommen, dass sich der Kraftwagen 10 mit weiteren Kraftwagen 12, 14 in einem Stau befindet, eine Stop-and-Go-Fahrt ausführt oder in einer Kolonne auf einer Straße 16 fährt. Das Führen des Kraftwagens 10 daher erfordert nur einen geringen Grad an Aufmerksamkeit von einem Fahrer 18 des Kraftwagens 10. Der Fahrer 18 möchte deshalb während der Fahrt Büroarbeiten erledigen, wobei ihm das Ergebnis der Arbeit später beispielsweise in seinem Büro 20 oder zuhause zur Verfügung stehen soll.

Der Fahrer 18 hat vor Antritt der Fahrt ein Laptop 22 in einen Kofferraum 24 des Kraftwagens 10 gelegt. Auf dem Laptop 22 ist eine Büroanwendungssoftware 26 installiert, mittels welcher er die Büroarbeit erledigen kann. Bei der Büroanwendungssoftware 26 handelt es sich im Zusammenhang mit der Erfindung beispielsweise um ein Textverarbeitungsprogramm, ein E-Mail-Programm, ein Programm zum Entwerfen von Grafiken für Präsentationen, ein Tabellenkalkulationsprogramm, ein Zeichenprogramm, ein CAD-Programm, ein Audioprogramm zum Bearbeiten von Musikdaten oder eine Zugangssoftware zum Aufbauen einer Datenverbindung zum Büro 20, also beispielsweise eine VPN-Software (VPN - Virtual Private Network). Anstelle des Laptops 22 kann die Büroanwendungssoftware 26 auch auf einem Tablet-PC oder einem Smartphone installiert sein.

Das Gerät für die Büroarbeiten, also im vorliegenden Beispiel das Laptop 22, muss sich nicht Kofferraum 24 befinden. Es kann sich auch an einer anderen Stelle im Kraftwagen 10 befinden, beispielsweise in einem Handschuhfach. Es kann auch vorgesehen sein, dass sich das Gerät außerhalb des Kraftwagens 10 befindet. Genauso kann vorgesehen sein, dass der Fahrer 18 einen Netzwerkcomputer 28 nutzen kann, welcher eine Büroanwendungssoftware 26', ähnlich der Büroanwendungssoftware 26, bereitstellt, die als Cloud-Netzwerkdienst über eine Netzwerkverbindung des Internets 30 von dem Fahrer 18 genutzt werden kann.

Wenn der Fahrer 18 die Büroanwendungssoftware 26 nutzt, kann er das Arbeitsergebnis beispielsweise auf dem Laptop 22 speichern und dieses nach Beendigung der Fahrt in das Büro 20 mitnehmen, um dort das Arbeitsergebnis zu nutzen. Wenn der Fahrer 18 die Büroanwendungssoftware 26' des Netzwerkcomputers 28 nutzt, kann der Fahrer 18 nach Beendigung der Fahrt vom Büro 20 aus durch Synchronisieren der in dem Netzwerkcomputer 28 gespeicherten Daten mit einem (nicht dargestellten) Bürocomputer im Büro 20 ebenfalls auf das Arbeitsergebnis zugreifen.

Bei dem Kraftwagen 10 ist dem Fahrer 18 ermöglicht, das Laptop 22 oder eines der anderen beschriebenen Geräte von seinem Fahrersitz 32 zu bedienen. Zusätzlich oder alternativ dazu kann es dem Fahrer 18 ermöglicht sein, auch die Büroanwendungssoftware 26' des Netzwerkcomputers 28 von seinem Fahrersitz 32 aus zu bedienen. Der Kraftwagen 10 weist hierzu eine Steuereinrichtung 34 auf, die beispielsweise ein Steuergerät umfassen kann, das Bestandteil eines Infotainmentsystems des Kraftwagens 10 ist. Die Steuereinrichtung 34 ist mit zumindest einem Bildschirm 36 des Kraftwagens 10 gekoppelt, beispielsweise einem Bildschirm des Infotainmentsystems oder einem Bildschirm eines Kombiinstruments des Kraftwagens 10 oder einer Head-up-Anzeigeeinheit oder eine in eine Frontscheibe oder in eine Seitenscheibe des Kraftwagens (10) integrierte Anzeigevorrichtung. Letztere kann beispielsweise eine Folie mit Flüssigkristallen umfassen. Des Weiteren ist die Steuereinrichtung 34 mit zumindest einem Bedienelement 38 des Kraftwagens 10 gekoppelt. Das Bedienelement 38 kann beispielsweise ein Touchpad, ein Gestenerkennungssystem oder eine Tastatur sein. Des Weiteren kann die Steuereinrichtung 34 mit einem Lautsprecher 40 einer (nicht weiter dargestellten) Audioanlage des Kraftwagens 10 gekoppelt sein.

Die Steuereinrichtung 34 ist dazu eingerichtet, ein fahrzeugfremdes Computersystem zu aktivieren. In dem vorliegenden Beispiel wird durch die Steuerungseinrichtung 34 das Laptop 22 aktiviert. Das Laptop kann hierzu beispielsweise an eine Spannungsversorgungseinrichtung 42 des Kraftwagens 10 angeschlossen sein, etwa einer Steckdose oder einer Spannungsversorgung einer Docking-Station, an welcher das Laptop 22 angeschlossen sein kann.

Die Steuereinrichtung 34 ist in diesem Fall dazu ausgelegt, durch Aussenden eines Steuersignals die Spannungsversorgungseinrichtung 42 zu schalten, sodass das Laptop 22 mit einer Versorgungsspannung versorgt wird. Hierdurch wird das Laptop 22 dann aktiviert, sodass es die Büroanwendungssoftware 26 ausführt.

Der Kraftwagen 10 kann auch eine Kommunikationseinrichtung 44 aufweisen, beispielsweise einen Router für ein WLAN oder ein LAN oder ein USB-Steuereingerät oder eine Bluetooth-Kommunikationseinheit. Das Laptop 22 kann zum Zwecke einer drahtgebundenen Verbindung 46 mit der Kommunikationseinheit 44 einen Kommunikationsanschluss 48 aufweisen, an welchem ein Datenkabel 50 des Laptops 22 angeschlossen werden kann. Es kann auch vorgesehen sein, dass das Laptop 22 über eine Funkverbindung 52 mit der Kommunikationseinheit 44 kommuniziert. Zum Aktivieren des Laptops 22 kann entsprechend vorgesehen sein, dass die Steuereinheit 34 ein Aufwecksignal über die Kommunikationseinheit 44 an das Laptop 22 sendet, woraufhin dann das Laptop 22 die Büroanwendungssoftware 26 ausführt.

Es kann auch vorgesehen sein, dass das Laptop 22 über die Kommunikationseinheit 44 eine Netzwerkverbindung zum Internet 30 aufbaut, wozu beispielsweise die Kommunikationseinheit 44 mit einer Telekommunikationseinheit 54 gekoppelt sein kann. Die Telekommunikationseinheit 54 kann beispielsweise dazu ausgelegt sein, mit einem Telekommunikationsnetzwerk 56 über eine Funkverbindung 58 zu kommunizieren. Bei dem Telekommunikationsnetzwerk 56 kann es sich beispielsweise um eines nach dem Standard GSM, UMTS oder LTE handeln.

Für den Fall, die die Büroarbeit mittels des Netzwerkcomputers 28 erledigt werden soll, kann vorgesehen sein, dass die Steuereinrichtung 34 über die Kommunikationseinheit 44 und die Telekommunikationseinheit 54 ein entsprechendes Aufwecksignal an den Netzwerkcomputer 28 sendet. Auch andere externen Computersysteme können auf diese Weise aktiviert werden.

Es kann vorgesehen sein, dass dem Fahrer eine Auswahl der verfügbaren Computersysteme, hier also beispielsweise das Laptop 22 und der Netzwerkcomputer 28, in einem Menu angezeigt wird, das beispielsweise auf dem Bildschirm 36 angezeigt sein kann. Ein entsprechender Menüpunkt "Portable Computersystem" kann hierbei mit den Werten "nicht erkannt" (grau) bzw. "erkannt" (rot) die Verfügbarkeit unterschiedlicher Computersysteme anzeigen, die entweder in einem externen Netzwerk, wie hier dem Internet 30, oder auch innerhalb des Kraftwagens 10, wie hier das Laptop 22, von der Steuereinheit 34 automatisch erkannt wurden.

Durch Auswählen eines der erkannten Computersysteme kann dieses Computersystem dann in vom Betriebsmodus "inaktiv" oder "Stand-by" in den Betriebsmodus "aktiv" versetzt werden, wodurch dann die Büroanwendungssoftware 26 bzw. 26' ausgeführt wird.

Nach dem Aktivieren des Computersystems kann dem Fahrer 18 ermöglicht sein, vom Fahrersitz 32 aus das Computersystem auch zu bedienen. Hierzu kann vorgesehen sein, dass auf dem Bildschirm 36 oder einem anderen Bildschirm des Kraftwagens 10 durch die Steuereinrichtung 34 ein Bildschirminhalt angezeigt wird, der eine Bildschirmausgabe der Büroanwendungssoftware 26 bzw. 26' angezeigt wird. Mit anderen Worten kann der Fahrer 18 den Bildschirm 36 anstelle des (nicht dargestellten) Bildschirms des Laptops 22 nutzen. Die Übertragung des Bildschirminhalts vom Laptop 22 zur Steuereinrichtung 34 kann beispielsweise mittels VNC realisiert sein. Entsprechend kann vorgesehen sein, dass die Steuereinrichtung 34 über den Lautsprecher 40 Tonsignale des Laptops 22 oder des Netzwerkcomputers 28 an den Fahrer 18 ausgibt.

Um die Büroanwendungssoftware 26, 26' bedienen zu können, kann vorgesehen sein, dass der Fahrer 18 das Bedienelement 38 und weitere Bedienelemente des Kraftwagens nutzt. Die Steuereinrichtung 34 empfängt dazu die von dem Bedienelement 38 und den übrigen Bedienelementen erzeugten Signale und leitet diese über die Kommunikationseinheit 44 an das Laptop 22 bzw. Netzwerkcomputer 28 weiter. Der Fahrer 18 muss also nicht beispielsweise eine Computermaus oder eine Tastatur des Laptops 22 selbst verwenden. Die Ein- und Ausgabe für die Bedienung der Büroanwendungssoftware 26, 26' wird stattdessen bei dem Kraftwagen 10 über Komponenten des Kraftwagens 10 selbst, also im vorliegenden Beispiel z.B. mittels des Bedienelements 38, des Bildschirms 36 und des Lautsprechers 40 durch die Steuereinrichtung 34 ermöglicht.

Weitere denkbare Funktionen zur Verbesserung des Arbeitsplatzes im Kraftwagen 10 sind die automatische Einstellung einer Position des Fahrersitzes 32, eines (nicht dargestellten) Lenkrades, der Beleuchtung im Fahrgastraum des Kraftwagens 10 sowie das Einziehen des Gaspedals und/oder Bremspedals.

Bei dem Kraftwagen 10 kann auch vorgesehen sein, die Bedienung des Laptops 22 bzw. des Netzwerkcomputers 28 mit einer pilotierten Fahrt zu kombinieren, bei welcher der Fahrer 18 weder die Längs- noch die Querführung des Kraftwagens 10 durchführen muss. Hierzu kann der Kraftwagen 10 eine Führungseinrichtung 60 für einen autonomen Fahrbetrieb aufweisen. Die Führungseinrichtung 60 kann beispielsweise ein Steuergerät des Kraftwagens 10 umfassen. Die Bedienung des fahrzeugfremden Computersystems (z.B. Laptop 22 oder Netzwerkcomputer 28) kann dabei in der Weise mit der pilotierten Fahrt kombiniert sein, dass der Fahrer 18 zunächst den autonomen Fahrbetrieb auswählt, wodurch dann die Steuereinrichtung 34 die Führungseinrichtung 60 aktiviert, und dann anschließend durch die Steuereinrichtung 34 automatisch oder aber auch durch eine weitere Auswahl durch den Fahrer 18 das fahrzeugfremde Computersystem aktiviert wird.

Diese Kombination kann noch weiter zusammengefasst sein, indem dem Fahrer 18 die Möglichkeit geboten wird, den Kraftwagen 10 von einem Fahrmodus in einen Arbeitsmodus oder Büroarbeitsmodus umzuschalten. Während der Fahrer 18 hierbei im Fahrmodus den Kraftwagen 10 selbst führen muss, kann das Aktivieren des Arbeitsmodus umfassen, dass durch die Steuereinrichtung 34 sowohl die Führungseinrichtung 60 als auch das fahrzeugfremde Computersystem, also das Laptop 22 oder der Netzwerkcomputer 28 automatisch aktiviert werden und gegebenenfalls die weiteren, bereits beschriebenen automatischen Einstellungen vorgenommen werden.

Durch die Steuereinrichtung 34 kann auch das Deaktivieren des Laptops 22 vorgesehen sein, sodass die Büroanwendungssoftware 26 beendet wird und die Daten mit den Arbeitsergebnissen sicher gespeichert werden. Auch die Deaktivierung des Netzwerkcomputers 28 durch die Steuereinrichtung 34 kann vorgesehen sein. In diesem Fall bedeutet das Deaktivieren, dass eine Netzwerkverbindung zum Netzwerkcomputer 28 beendet wird und zuvor dem Netzwerkcomputer 28 ein Signal zum Speichern der mit der Büroanwendungssoftware 26' erzeugen Arbeitsergebnisse übermittelt wird.

Das Deaktivieren kann automatisch gemäß einem vorbestimmten Deaktivierungskriterium erfolgen. Beispielsweise kann das Zurückschalten des Kraftwagens 10 vom Arbeitsmodus in den Fahrmodus als ein solches Kriterium herangezogen werden. Ein weiteres Kriterium kann darin bestehen, dass die Deaktivierung erfolgt, falls der Fahrer 18 die Büroanwendungssoftware 26, 26' für eine vorbestimmte Zeit nicht bedient.

Auch ein manuelles Deaktivieren durch den Fahrer 18 kann durch entsprechende Bedienmöglichkeiten (Auswahl eines entsprechenden Menüpunkts im Bedienmenü der Steuereinrichtung 34 oder Betätigen eines dafür vorgesehenen Bedienelements) realisiert sein. Die manuelle Deaktivierung ist dabei in der Weise umgesetzt, dass der Fahrer 18 sich währenddessen auf den Verkehr konzentrieren kann und nicht beide Hände vom Lenkrad des Kraftwagens 10 lösen muss. Der Fahrer kann also die Fahrt mit dem Kraftwagen 10 fortsetzen, ohne dass er zuvor zum Deaktivieren der Büroarbeitssoftware 26, 26' noch eine umständliche Bedienhandlung ausführen muss, die ihn vom Verkehr ablenken könnte. Da er zum Bedienen der Büroarbeitssoftware 26, 26' auch keine speziellen Bedienelemente, wie eine Computermaus, oder sogar das Laptop 22 selbst auf seinen Schoß oder auf den Beifahrersitz legen muss, kann der Fahrer seine Bürotätigkeit auch jederzeit schnell unterbrechen und die Führung des Kraftwagens 10 selbst übernehmen, ohne dass danach die Gefahr besteht, dass das Laptop 22 beschädigt wird oder Bedienelemente unkontrolliert beispielsweise bei einer Bremsung des Kraftwagens 10 in diesem verrutschen.

Durch das Beispiel ist gezeigt, wie ein externes Computersystem (z. B. ein Laptop) mit dem Fahrzeug gekoppelt werden kann und während der Fahrt über eine definierte Schnittstelle vom Fahrer bzw. von einer Steuereinrichtung des Fahrzeugs aktiviert und deaktiviert werden kann. Durch diese Zusatzfunktion wird es dem Fahrer in Zukunft möglich sein, den Betriebszustand eines externen, an das Fahrzeug gekoppeltes Computersystem über die vorgestellte Schnittstelle während der Fahrt zu beeinflussen. Durch Weiterbildung dieses Ansatzes ist eine Nutzung des Fahrzeugs als Eingabe- und Ausgabegerät des externen Computersystems in der beschriebenen Weise möglich.

## Patentansprüche

1. Kraftwagen (10) mit
- einer Steuereinrichtung (34), die dazu ausgelegt ist, einen Betriebszustand eines fahrzeugfremden Computersystems (22, 28) für Büroanwendungen zwischen einem Aktivzustand, in welchem das Computersystem (22, 28) zumindest eine Büroanwendungssoftware (26, 26') ausführt, und einem Passivzustand, in welchem das Computersystem (22, 28) deaktiviert ist, umzuschalten,
- einer Kommunikationseinrichtung (44), welche dazu ausgelegt ist, Daten mit dem Computersystem (22, 28) auszutauschen, und
- einer Bedieneinrichtung (38) zum Bedienen zumindest einer Kraftwagenkomponente in einem ersten Betriebszustand,
**dadurch gekennzeichnet, dass**
die Steuereinrichtung dazu ausgelegt ist, den Betriebszustand des Computersystems (22, 28) in Abhängigkeit von einer Bedienhandlung eines Benutzers (18) an der Bedieneinrichtung (38) zu wechseln und zum Wechseln des Betriebszustands ein Aufwecksignal und/oder ein Ausschaltsignal über die Kommunikationseinrichtung (44) an das Computersystem (22, 28) zu übertragen, und dass
die Bedieneinrichtung (38) zwischen dem ersten und einem zweiten Betriebszustand umschaltbar ausgestaltet ist, in welchem die Bedieneinrichtung (38) Steuersignale anstatt zu der zumindest einen Kraftwagenkomponente zu dem Computersystem (22, 28) überträgt und hierdurch für die Bedienung des Computersystems (22, 28) angepasst ist.

2. Kraftwagen (10) nach Anspruch 1, **gekennzeichnet durch** eine Anschlusseinrichtung zum Bereitstellen einer Betriebsspannung für das Computersystem (22), wobei die Anschlusseinrichtung dazu ausgelegt ist, die Betriebsspannung an einem elektrischen Anschluss (42) für das Computersystem (22) in Abhängigkeit von einem Steuersignal der Steuereinrichtung (34) zu erzeugen, und wobei die Steuereinrichtung (34) dazu ausgelegt ist, zum Wechseln des Betriebszustandes des Computersystems (22) die Betriebsspannung **durch** Erzeugen eines vorbestimmten Steuersignals zu verändern.

3. Kraftwagen (10) nach Anspruch 2, **dadurch gekennzeichnet, dass** der elektrische Anschluss (42) in einem Kofferraum (24) des Kraftwagens (10) angeordnet ist.

4. Kraftwagen (10) nach einem der vorhergehenden Ansprüche, wobei die Kommunikationseinrichtung (44) für ein Computernetzwerk oder für einen USB oder für eine Kommunikation gemäß dem Bluetooth-Standard ist.

5. Kraftwagen (10) nach einem der vorhergehenden Ansprüche, **dadurch gekennzeichnet, dass** die Steuereinrichtung (34) dazu ausgelegt, eine Verfügbarkeit des Computersystems (22, 28) selbständig zu detektieren und das Ergebnis der Detektion einem Benutzer (18) des Kraftwagens (10) über eine Anzeigeeinrichtung (36) anzuzeigen.

6. Kraftwagen (10) nach einem der vorhergehenden Ansprüche, **dadurch gekennzeichnet, dass** die Bedieneinrichtung (38) zumindest eines aus den folgenden Eingabegeräten umfasst: ein Touchpad, ein Gestenerkennungssystem, eine Tastatur, einen Lenkstockhebel, ein Lenkrad, ein Pedal, einen Dreh-Drück-Steller, einen Schalter einer Armatur des Kraftwagens.

7. Kraftwagen (10) nach einem der vorhergehenden Ansprüche, mit einer Ausgabeeinrichtung (36, 40), die dazu ausgelegt ist, in einem ersten Betriebszustand ein Signal zumindest einer Kraftwagenkomponente an einen Benutzer (18) des Kraftwagens (10) auszugeben, **dadurch gekennzeichnet, dass** die Ausgabeeinrichtung (38, 40) zwischen dem ersten und einem zweiten Betriebszustand umschaltbar ausgestaltet ist, in welchem die Ausgabeeinrichtung (38, 40) anstelle eines Signals der zumindest einen Kraftwagenkomponenten oder zusätzlich hierzu zumindest ein Signals des Computersystems (22, 28) empfängt und an den Benutzer (18) ausgibt.

8. Kraftwagen (10) nach einem der vorhergehenden Ansprüche, **dadurch gekennzeichnet, dass** die Ausgabeeinrichtung (38, 40) zumindest eines aus den folgenden Ausgabegeräte umfasst: einen Bildschirm (36) in einer Mittelkonsole des Kraftwagens (10), eine Head-up-Anzeigevorrichtung (36), einen Bildschirm (36) eines Kombiinstruments, eine in eine Frontscheibe oder eine Seitenscheibe des Kraftwagens (10) integrierte Anzeigevorrichtung (36), einen Lautsprecher (40) des Kraftwagens (10).

9. Kraftwagen (10) nach einem der vorhergehenden Ansprüche, **gekennzeichnet durch** eine Führungseinrichtung (60), die dazu ausgelegt ist, den Kraftwagen (10) in einem autonomen Fahrmodus eine Längs- und Querführung des Kraftwagens (10) selbsttätig ohne ein Zutun eines Fahrers (18) durchzuführen, wobei die Steuereinrichtung (34) dazu ausgelegt ist, den Kraftwagen (10) zwischen einem Fahrmodus, in welchem der Kraftwagen (10) **durch** den Fahrer (18) zu führen ist, und einem Büroarbeitsmodus umzuschalten, wobei das Umschalten in den Büroarbeitsmodus das Aktivieren der Führungsrichtung (60) und des Computersystems (22, 28) umfasst.

10. Kraftwagen (10) nach Anspruch 9, **dadurch gekennzeichnet, dass** das Aktivieren des Büroarbeitsmodus des Weiteren zumindest eine der folgenden Einstellungen durch die Steuereinrichtung (34) umfasst: eine Position des Fahrersitzes (32), eine Lage des Lenkrads, eine Beleuchtung im Fahrgastraum, das Zurückklappen oder Einziehen eines Pedals.

11. Verfahren zum Unterstützen eines Fahrers (18) bei der Erledigung von Büroarbeiten in einem Kraftwagen (10) nach einem der vorhergehenden Ansprüche, umfassend die Schritte:
- Wechseln eines Betriebszustands des fahrzeugfremden Computersystems (22, 28) durch die Steuereinrichtung in Abhängigkeit von einer Bedienhandlung eines Benutzers (18) an der zum Bedienen zumindest einer Kraftwagenkomponente des Kraftwagens (10) ausgelegten Bedieneinrichtung (38) des Kraftwagens (10) und zum Wechseln des Betriebszustands Übertragen eines Aufwecksignals und/oder eines Ausschaltsignal über eine Kommunikationseinrichtung (44) an das Computersystem (22, 28),
- Anpassen der Bedieneinrichtung (38) für die Bedienung des Computersystems (22, 28) und hierzu Umschalten der Bedieneinrichtung (38) zwischen einem ersten und einem zweiten Betriebszustand, wobei die Bedieneinrichtung (38) im ersten Betriebszustand Steuersignale zu der zumindest einen Kraftwagenkomponente und im zweiten Betriebszustand zu dem Computersystem (22, 28) anstatt zu der zumindest einen Kraftwagenkomponente überträgt.

12. Verfahren nach Anspruch 11, **dadurch gekennzeichnet, dass** als Computersystem (22, 28) zumindest eines aus den folgenden Geräten aktiviert wird:
ein Laptop (22), ein Tablet-PC, ein Netzwerkcomputer (28) mit einer Cloud-Arbeitsumgebung (26').

13. Verfahren nach Anspruch 11 oder 12, **dadurch gekennzeichnet, dass** das Computersystem (22, 28) automatisch durch die Steuereinrichtung (34) deaktiviert wird, falls ein vorbestimmtes Abschaltkriterium erfüllt ist.

## Claims

1. Motor vehicle (10) comprising
- a control device (34), designed to change over an operating state of an extravehicular computer system (22, 28) for office applications between an active state, in which the computer system (22, 28) executes at least one piece of office application software (26, 26'), and a passive state, in which the computer system (22, 28) is deactivated,
- a communication device (44), designed to interchange data with the computer system (22, 28), and
- an operating device (38) for operating at least one motor vehicle component in a first operating state,
**characterised in that**
the control device is designed to change over the operating state of the computer system (22, 28) based on an operator control action by a user (18) on the operating device (38) and to change over the operating state by transmitting a wake-up signal and/or a switch-off signal via the communication device (44) to the computer system (22, 28), and **in that**
the operating device (38) is designed to be switchable between the first and a second operating state, in which the operating device (38) transmits control signals to the computer system (22, 28) instead of to the at least one motor vehicle component and thus is adapted for operation of the computer system (22, 28).

2. Motor vehicle (10) according to claim 1, **characterised by** a connection device for providing an operating voltage for the computer system (22), wherein the connection device is designed to generate the operating voltage on an electrical connection (42) for the computer system (22) based on a control signal from the control device (34), and wherein the control device (34) is designed, in order to change over the operating state of the computer system (22), to vary the operating voltage by generating a predetermined control signal.

3. Motor vehicle (10) according to claim 2, **characterised in that** the electrical connection (42) is arranged in a boot (24) of the motor vehicle (10).

4. Motor vehicle (10) according to any one of the preceding claims, wherein the communication device (44) is for a computer network or for a USB or for communication according to the Bluetooth standard.

5. Motor vehicle (10) according to any one of the preceding claims, **characterised in that** the control device (34) is designed to independently detect an availability of the computer system (22, 28) and to indicate the result of the detection to a user (18) of the motor vehicle (10) via a display device (36).

6. Motor vehicle (10) according to any one of the preceding claims, **characterised in that** the operating device (38) comprises at least one of the following input units:
a touchpad, a gesture recognition system, a keyboard, a control stalk, a pedal, a rotary/push control, or a switch on an instrument of the motor vehicle.

7. Motor vehicle (10) according to any one of the preceding claims, comprising an output device (36, 40) designed, in a first operating state, to output a signal of at least one motor vehicle component to a user (18) of the motor vehicle (10), **characterised in that** the output device (38, 40) is designed to be switchable between the first and a second operating state, in which the output device (38, 40) instead of a signal from the at least one motor vehicle component, or in addition thereto, receives at least one signal from the computer system (22, 28) and outputs it to the user (18).

8. Motor vehicle (10) according to any one of the preceding claims, **characterised in that** the output device (38, 40) comprises at least one of the following output units: a screen (36) in a central console of the motor vehicle (10), a head-up display device (36), a screen (36) of an electronic instrument cluster, a display device (36) integrated into a front windscreen or side window of the motor vehicle (10), or a loudspeaker (40) of the motor vehicle (10).

9. Motor vehicle (10) according to any one of the preceding claims, **characterised by** a guide device (60) designed to perform longitudinal and transversal guidance of the motor vehicle (10) in an autonomous driving mode of the motor vehicle (10) independently and with no action from a driver (18), wherein the control device (34) is designed to switch the motor vehicle (10) between a driving mode in which the motor vehicle (10) is to be guided by the driver (18) and an office working mode, wherein the switching to office working mode comprises the activation of the guidance device (60) and the computer system (22, 28).

10. Motor vehicle (10) according to claim 9, **characterised in that** the activation of the office working mode further comprises at least one of the following settings by the control device (34): a position of the driver's seat (32), a position of the steering wheel, lighting in the passenger compartment, and folding back or retraction of a pedal.

11. Method for assisting a driver (18) in performing office work in a motor vehicle (10) according to any one of the preceding claims, comprising the steps of:
- changing over an operating state of the extravehicular computer system (22, 28) by the control device based on an operator control action by a user (18) on the operating device (38) of the motor vehicle (10) designed for controlling at least one motor vehicle component of the motor vehicle (10) and to change over the operating state by transmitting a wake-up signal and/or a switch-off signal via the communication device (44) to the computer system (22, 28),
- adapting the operating device (38) for operating the computer system (22, 28) and to this end switching the operating device (38) between a first and a second operating state, wherein the operating device (38) in the first operating state transmits control signals to the at least one motor vehicle component and in the second operating state to the computer system (22, 28) instead of to the at least one motor vehicle component.

12. Method according to claim 11, **characterised in that** as a computer system (22, 28) at least one of the following devices is activated: a laptop (22), a tablet, or a network computer (28) with a cloud working environment (26').

13. Method according to claim 11 or 12, **characterised in that** the computer system (22, 28) is automatically deactivated by the control device (34) if a predetermined shutdown criterion is met.

## Revendications

1. Véhicule à moteur (10) avec
- un dispositif de commande (34), qui est configuré pour commuter un mode de fonctionnement d'un système informatique (22, 28) étranger au véhicule et destiné à des applications de bureau entre un mode actif, dans lequel le système informatique (22, 28) exécute au moins un logiciel d'application de bureau (26, 26'), et un mode passif, dans lequel le système informatique (22, 28) est désactivé,
- un dispositif de communication (44), qui est configuré pour échanger des données avec le système informatique (22, 28), et
- un dispositif d'utilisation (38) pour utiliser au moins un composant de véhicule à moteur dans un premier mode de fonctionnement,
**caractérisé en ce que**
le dispositif de commande est configuré pour changer le mode de fonctionnement du système informatique (22, 28) en fonction d'une action d'utilisation d'un utilisateur (18) sur le dispositif d'utilisation (38) et/ou pour, en vue du changement du mode de fonctionnement, transmettre un signal de réveil et/ou un signal d'arrêt au système informatique (22, 28) par l'intermédiaire du dispositif de communication (44), et **en ce que**
le dispositif d'utilisation (38) est configuré de manière à pouvoir être commuté entre le premier mode de fonctionnement et un deuxième mode de fonctionnement, dans lequel le dispositif d'utilisation (38) transmet des signaux de commande non pas à l'au moins un composant de véhicule à moteur mais au système informatique (22, 28) et est ainsi adapté pour l'utilisation du système informatique (22, 28).

2. Véhicule à moteur (10) selon la revendication 1, **caractérisé par** un dispositif de connexion pour fournir une tension de fonctionnement pour le système informatique (22), le dispositif de connexion étant configuré pour produire la tension de fonctionnement à une borne de connexion (42) électrique pour le système informatique (22) en fonction d'un signal de commande du dispositif de commande (34) et le dispositif de commande (34) étant configuré pour, en vue du changement du mode de fonctionnement du système informatique (22), modifier la tension de fonctionnement en produisant un signal de commande prédéterminé.

3. Véhicule à moteur (10) selon la revendication 2, **caractérisé en ce que** la borne de connexion (42) électrique est disposée dans un coffre (24) du véhicule à moteur (10).

4. Véhicule à moteur (10) selon l'une quelconque des revendications précédentes, le dispositif de communication (44) étant prévu pour un réseau informatique ou pour un USB ou pour une communication selon le standard Bluetooth.

5. Véhicule à moteur (10) selon l'une quelconque des revendications précédentes, **caractérisé en ce que** le dispositif de commande (34) est configuré pour détecter de manière autonome une disponibilité du système informatique (22, 28) et pour indiquer le résultat de la détection à un utilisateur (18) du véhicule à moteur (10) par l'intermédiaire d'un dispositif d'affichage (36).

6. Véhicule à moteur (10) selon l'une quelconque des revendications précédentes, **caractérisé en ce que** le dispositif d'utilisation (38) comprend au moins l'un des appareils d'entrée suivants : un pavé tactile, un système de reconnaissance de gestes, un clavier, un levier de direction, un volant de direction, une pédale, un actionneur tourner-pousser, un commutateur d'un tableau de bord du véhicule à moteur.

7. Véhicule à moteur (10) selon l'une quelconque des revendications précédentes, avec un dispositif de sortie (36, 40) qui est configuré pour, dans un premier mode de fonctionnement, délivrer en sortie un signal d'au moins un composant de véhicule à moteur à un utilisateur (18) du véhicule à moteur (10), **caractérisé en ce que** le dispositif de sortie (38, 40) est configuré de manière à pouvoir être commuté entre le premier mode de fonctionnement et un deuxième mode de fonctionnement, dans lequel le dispositif de sortie (38, 40) reçoit, à la place d'un signal de l'au moins un composant de véhicule à moteur ou en plus de celui-ci, au moins un signal du système informatique (22, 28) et le délivre en sortie à l'utilisateur (18).

8. Véhicule à moteur (10) selon l'une quelconque des revendications précédentes, **caractérisé en ce que** le dispositif de sortie (38, 40) comprend au moins un des appareils de sortie suivants : un écran (36) dans une console centrale du véhicule à moteur (10), un dispositif d'affichage à tête haute (36), un écran (36) d'un instrument de bord, un dispositif d'affichage (36) intégré dans un pare-brise ou dans une vitre latérale du véhicule à moteur (10), un haut-parleur (40) du véhicule à moteur (10).

9. Véhicule à moteur (10) selon l'une quelconque des revendications précédentes, **caractérisé par** un dispositif de guidage (60) qui est configuré pour faire passer le véhicule à moteur (10) de manière autonome, c'est-à-dire sans intervention d'un conducteur (18), dans un mode de conduite autonome correspondant à un guidage longitudinal et transversal du véhicule à moteur (10), le dispositif de commande (34) étant configuré pour commuter le véhicule à moteur (10) entre un mode de conduite, dans lequel le véhicule à moteur (10) doit être guidé par le conducteur (18), et un mode de travail de bureau, la commutation dans le mode de travail de bureau comprenant l'activation du dispositif de guidage (60) et du système informatique (22, 28).

10. Véhicule à moteur (10) selon la revendication 9, **caractérisé en ce que** l'activation du mode de travail de bureau comprend en outre au moins un des réglages suivants par le dispositif de commande (34) : une position du siège de conducteur (32), une position du volant de direction, un éclairage dans l'habitacle, le relâchement ou l'enfoncement d'une pédale.

11. Procédé pour assister un conducteur (18) lors de la réalisation de tâches de bureau dans un véhicule à moteur (10) selon l'une quelconque des revendications précédentes, comprenant les étapes suivantes :
- le changement d'un mode de fonctionnement du système informatique (22, 28) étranger au véhicule par le dispositif de commande en fonction d'une action d'utilisation d'un utilisateur (18) sur le dispositif d'utilisation (38), configuré pour utiliser au moins un composant du véhicule à moteur (10), du véhicule à moteur (10) et, en vue du changement du mode de fonctionnement, la transmission d'un signal de réveil et/ou d'un signal d'arrêt au système informatique (22, 28) par l'intermédiaire d'un dispositif de communication (44),
- l'adaptation du dispositif d'utilisation (38) pour l'utilisation du système informatique (22, 28) et, à cet effet, la commutation du dispositif d'utilisation (38) entre un premier mode de fonctionnement et un deuxième mode de fonctionnement, le dispositif d'utilisation (38) transmettant des signaux de commande, dans le premier mode de fonctionnement, à l'au moins un composant de véhicule à moteur et, dans le deuxième mode de fonctionnement, au système informatique (22, 28) et non à l'au moins un composant de véhicule à moteur.

12. Procédé selon la revendication 11, **caractérisé en ce qu'**e l'on active au moins un des appareils suivants est activé en tant que système informatique (22, 28) : un ordinateur portable (22), une tablette PC, un ordinateur en réseau (28) avec un environnement de travail dématérialisé (26').

13. Procédé selon la revendication 11 ou 12, **caractérisé en ce que** le système informatique (22, 28) est automatiquement désactivé par le dispositif de commande (34) si un critère de coupure prédéterminé est satisfait.
